# EUROPÄISCHE PATENTSCHRIFT

(11) **EP 2 348 242 B1**
(45) Veröffentlichungstag und Bekanntmachung des Hinweises auf die Patenterteilung: **17.10.2012**
(21) Anmeldenummer: 10075041.3
(22) Anmeldetag: 26.01.2010
(51) Int. Cl.: F16L 37/34, F16L 37/35, F16L 37/36

(54) **Eine Trockenkupplung bildende Kupplungsvorrichtung zum dichtenden Verbinden von flüssige oder gasförmige Medien transportierenden Leitungen**
A coupling forming a dry coupling for sealed connection of supply channels transporting fluid or gaseous media
Dispositif de couplage formant un couplage à sec destiné au raccord de coupure rapide destiné à la liaison étanche de conduites transportant des milieux liquides ou gazeux

(43) Veröffentlichungstag der Anmeldung: 27.07.2011
(73) Patentinhaber: Roman Seliger GmbH, 22848 Norderstedt (DE)
(72) Erfinder: Adam, Michael, 24589 Nortorf (DE); Brandt, Holger, 22869 Schenefeld (DE); Hamkens, Hauke-Peter, 25832 Tönning (DE); Schwarz, Eugen, 21033 Hamburg (DE); Buhk, Birger, 21039 Hamburg (DE)
(74) Vertreter: Stork Bamberger

(56) Entgegenhaltungen:
- US-A- 2 614 830
- US-A- 3 139 110
- US-A- 5 168 897

## Beschreibung

Die Erfindung betrifft eine eine Trockenkupplung bildende Kupplungsvorrichtung zum dichtenden Verbinden von flüssige oder gasförmige Medien transportierenden Leitungen, umfassend eine erste Kupplungshälfte und eine zweite Kupplungshälfte, die eine Kupplungsachse bestimmen und jeweils mit einer eine erste bzw. eine zweite Ventileinrichtung bildenden Ventileinrichtung ausgestattet sind, die zu ihrem Öffnen und Schließen eine in zugehöriger Kupplungshälfte angeordnete erste bzw. zweite Zwangsführungseinrichtung umfasst, umfassend eine Betätigungseinrichtung mit einem Betätigungselement, das zum Betätigen der beiden Zwangsführungseinrichtungen drehbewegbar um die Kupplungsachse angeordnet ist, wobei die erste Ventileinrichtung und die zweite Ventileinrichtung ein mit erster bzw. zweiter Ventilöffnung versehenes erstes bzw. zweites Durchlasselement sowie ein erstes Absperrelement bzw. ein zweites Absperrelement umfassen, die jeweils die erste Ventilöffnung bzw. die zweite Ventilöffnung schließen bzw. öffnen, wobei die rotatorische Bewegung des Betätigungselements in axiale Bewegung umgesetzt wird, die in Abhängigkeit von der Drehrichtung des Betätigungselements in die eine oder die andere Richtung der Kupplungsachse gerichtet ist und die Schließbewegung bzw. die Öffnungsbewegung der Absperrelemente bewirkt, und umfassend in drehfester und axial gesicherter Kupplungsverbindung lösbar verbundene Anschlusskupplungsteile.

Aus DE 20 306 852 U1 ist eine Trockenkupplung bekannt, deren beiden Kupplungshälften jeweils mit einer Zwangsführungseinrichtung ausgestattet sind. Jede Zwangsführungseinrichtung weist eine Steuerhülse auf, die in jeder Kupplungshälfte jeweils mit Drehantrieb versehen und in axialer Richtung translatorisch bewegbar ist. Die Drehantriebe sind über aneinandergeschlossene Gehäuse-Mantelelemente gemeinsam betätigbar, und Kugelventile sind zum sequentiellen Schließen und Öffnen voneinander entkoppelt. Dies führt in der Praxis zu nicht zufriedenstellender Trockentrennung. Translatorische Bewegung der Steuerhülsen ist in rotatorische Bewegung der Kugelventile umzusetzen. Eine solche Kupplung baut mit Mitteln zum Umsetzen rotatorischer Antriebsbewegungen in rotatorische Bewegungen der Ventilelemente unter Zwischenschaltung translatorischer Bewegungen der Steuerhülsen relativ aufwendig. Der Wirkungsgrad der Kupplung ist durch Reibungsverluste infolge mehrfacher Bewegungsumsetzung beeinträchtigt. Die Kupplung ist aufgrund ihrer Kinematik mit sequentiellen Bewegungsabläufen insbesondere als Dampfkupplung nicht geeignet. Andere als Dampfkupplungen eingesetzte Kupplungen, die nur mit Ventil-Zwangsführung einseitig im Mutterteil ausgestattet sind, bergen die Gefahr in sich, dass das Vaterteil beim Schließen undicht bleibt mit der Folge, dass insbesondere beim Durchleiten von Dampf ein erhebliches Gefahrenpotential entsteht, was im Gefahrenfall zumeist mit Betriebsstillsetzung einer ganzen Anlage und Einsatz von Notkräften verbunden ist.

Eine aus US 5 168 897 A bekannte Kupplungsvorrichtung umfasst Kegelventile mit Absperrelementen sowie Ventilsteuermittel, die die Absperrelemente zum Schließen und Öffnen der Ventile in entgegengesetzte axiale Richtungen verlagern. Gehäusehälften, die um die Kupplungsachse relativ zueinander drehbar sind, bilden mittels der Drehverbindung zum Kuppeln/Entkuppeln eine Arretierverbindung aus, durch die auch die Kegelventile durch relatives Verdrehen der Kupplungshälften zueinander betätigt werden. Die Handhabung ist erschwert, und die Ventilanordnung belässt eine Trockenkupplung beinträchtigende Fluidräume.

Der Erfindung liegen die Ziele zugrunde, die gattungsgemäße Kupplungsvorrichtung hinsichtlich Bauform, Kinematik, Funktions- und Handhabungssicherheit, Wirkungsgrad sowie Einsatz auch für Medien besonderer Gefahrenklassen, z. B. für Dämpfe zu verbessern.

Die Ziele der Erfindung werden in Verbindung mit den Merkmalen der eingangsgenannten Kupplungsvorrichtung dadurch gelöst, dass das erste Absperrelement und das zweite Absperrelement mittels einer Drehmomente übertragenden, durch Formschluss hergestellten Koppelverbindung direkt drehfest aneinander gekoppelt und in diesem Koppelverbund gemeinsam um die Kupplungsachse drehbar und in beide Richtungen der Kupplungsachse zum Öffnen und Schließen der Ventilöffnungen verlagerbar angeordnet sind, wobei die Zwangsführungseinrichtungen Steuermittel umfassen, die die Drehbewegung des Betätigungselements in eine Schraub-Rollbewegung der in dem Koppelverbund befindlichen Absperrelemente richtungsabhängig umsetzen, und dass das Betätigungselement mit nur einem der beiden Absperrelemente zum Umsetzen der Rotationsbewegung des Betätigungselements in die Schraub-Rollbewegung der im Koppelverbund befindlichen Absperrelemente verbunden ist, wobei, ausgehend von Ventil-Schließpositionen beider Absperrelemente, die Schraub-Rollbewegung in die eine Achsrichtung zum Öffnen und umgekehrt zum Schließen der Ventileinrichtungen führt.

Die erfindungsgemäßen Maßnahmen führen zu wesentlicher Verbesserung der Kinematik beim Öffnen und insbesondere Schließen der Kupplung. Man erreicht insbesondere, dass beide Absperrelemente im Antriebsverbund zeitgleich, das heißt ohne sequenzielle Folge betrieben werden, wobei sie mittels einfacher, relativ verschleißarmer Zwangsführung in beiden Kupplungshälften gemeinsam geschlossen und geöffnet werden. Besondere Bedeutung kommt dem zwangsgeführten Schließen zu, indem nämlich beide Ventileinrichtungen zwangsweise zeitgleich bei gesicherter Verbindung der Kupplungshälften geschlossen werden.

Mittels des erfindungsgemäßen Koppelverbundes der beiden Absperrelemente und der in Verbindung damit vorgesehenen Antriebssteuerung und Zwangsführung gelingt es, dass Bauelemente zum Betätigen sowie zum Drehantrieb ausschließlich Bestandteile einer Kupplungshälfte sind, während die andere Kupplungshälfte, obwohl gleichfalls mit der Zwangsführung ausgestattet, ein besonders einfaches, raumsparendes und verschleißarmes Kupplungsteil ist. Mit der direkten Koppelverbindung der Absperrelemente erreicht man, dass Schließen und Öffnen der Ventileinrichtungen in beiden Kupplungshälften in synchronem Bewegungsablauf frei von sequentieller Steuerung erfolgen und zudem die Absperrelemente eingerichtet sind und genutzt werden, um nur von einer Kupplungshälfte zur anderen steuernde Koppelmomente zu übertragen, wobei der Steuerantrieb auf eine Kupplungshälfte reduziert ist.

Bei der Schraub-Rollbewegung handelt es sich um eine schraubenartige und zugleich rollende Bewegung der Absperrelemente um die Kupplungsachse mit Führung entlang einer helixartigen Linie. Es kommt darauf an, dass jedes Absperrelement in einem es unmittelbar umgebenden Lagergehäuse, nämlich einem Führungsgehäuse rollt. Wesentlich ist, dass jedes Absperrelement in Bezug auf das zugehörige Lagergehäuse, das es als Ventilgehäuse der einen Kupplungshälfte umgibt, schraub-rollbewegbar angeordnet ist und dieses Lagergehäuse mit dem entsprechenden Lagergehäuse der anderen Kupplungshälfte drehfest verbunden ist. Die Anordnung um die Kupplungsachse ist derart, dass ein sich schraubender Körper, nämlich das antreibende erste Absperrelement in der Kupplungshälfte, an der die Betätigungseinrichtung angeordnet ist, aus einer sich drehenden Hülse herausbewegbar bzw. umgekehrt dort hineinbewegbar ist.

Die Ventileinrichtungen werden zum Öffnen und Schließen zeitgleich betrieben, während die Kupplungshälften mittels lösbarer Verbindung der Anschlusskupplungsteile in drehfester und axial gesicherter Kupplungsverbindung bleiben. Gegenläufige Bewegungen der Ventilelemente der Kupplungshälften sind ausgeschlossen. Dies führt zu besonders zuverlässigem Trockentrennen, und man erreicht besondere Bedienungs- und Funktionssicherheit. Die Kupplung ist vor manipulierter Handhabung geschützt, sie lässt sich besonders sicher und zuverlässig als Dampf-Trockenkupplung und auch für andere gefährliche, unter hohem Druck stehende Strömungsmedien einsetzen. Im Ganzen ist eine Trockenkupplung erreicht, die hinsichtlich Bauform, Betriebs- und Funktionszuverlässigkeit, Handhabung und Einsatzspektrum besondere Vorteile aufweist.

Vorteilhaft sind die beiden Kupplungshälften durch ein Mutterteil und ein Vaterteil derart gebildet, dass das Mutterteil ein erstes Kupplungsgehäuse aufweist, in das ein Bestandteil des Vaterteil bildendes zweites Kupplungsgehäuse einfasst, wobei die Betätigungseinrichtung und damit der erfindungsgemäße einseitige Drehantrieb ausschließlich an dem Mutterteil angeordnet ist. Dies führt zu besonders einfacher und kostengünstiger Bauform des Vaterteils, das in vielen Anlagen in Mehrzahl als ortsfestes Stutzen-Anschlussteil zur Verwendung mit ein und demselben wahlweise anschließbaren Kupplungs-Mutterteil vorgesehen wird.

Gemäß bevorzugter Gestaltung weisen die Steuermittel der ersten und der zweiten Zwangsführungseinrichtung in koaxialer Anordnung mit der Kupplungsachse eine erste Steuerhülse bzw. eine zweite Steuerhülse auf, die jeweils an ihrem Umfang mit wenigstens einer ersten bzw. zweiten Steuerkurve zum Herbeiführen der Schraub-Rollbewegung der Absperrelemente ausgestattet sind, wobei die Steuerkurven führungsgleich ausgebildet sind. Die Steuerhülsen bilden einfache, vorzugsweise jeweils mit zwei korrespondierenden Steuerkurven ausgestattete Bauteile, die die in beide Richtungen der Kupplungsachse (im Folgenden allgemein als Achsrichtung bezeichnet) mit Rollbewegung verlagerbaren Absperrelemente raumsparend aufnehmen und als Lagergehäuse unmittelbar umgeben. Die führungsgleiche Ausbildung der Steuerkurven stellt sicher, dass der einseitig dreh-angetriebene Koppelverbund zuverlässig und bewegungsgenau in seiner Momente übertragenden Koppelverbindung bleibt.

Besonders vorteilhafte und bevorzugte Gestaltungen der Zwangsführungseinrichtungen bestehen darin, dass sie in die Steuerkurven einfassende Steuerstege aufweisen, die eine Steuerverbindung zwischen den Absperrelementen und den Anschlusskupplungsteilen herstellen, wobei die Anschlusskupplungsteile mit den zugehörigen Durchlassenelementen wenigstens drehfest verbunden sind. Mit solchen Steuerstegen, z. B. in Form von Abtastelementen oder Mitnehmerstiften mit daran angeordneten Führungselementen, erreicht man auf engstem Raum besonders belastbare und leichtgängige Zwangsführungen.

Eine Ausgestaltung besteht darin, dass die Steuerhülsen Bestandteile der Anschlusskupplungsteile sind, wobei die Steuerhülsen die Absperrelemente umgeben. Mit dieser integralen Gestaltung, in der Steuerhülse und Anschlusskupplungsteil eine gemeinsame Einheit bilden, erhält man eine besonders belastbare, dennoch einfache Kupplungsstruktur. Jede Steuerhülse bildet ein das zugehörige Absperrelement unmittelbar umgebendes Führungsgehäuse, in dem das Absperrelement rollt. Eine andere Ausgestaltung kann darin bestehen, dass die Steuerhülsen Bestandteile der Absperrelemente sind. Diese integrale, Absperrelement und Steuerhülse einheitlich bildende Bauform führt zum weiteren Einsparen von Bauteilen. Insbesondere können dann die Anschlusskupplungsteile durch eine erste äußere Gehäusehülse der ersten Kupplungshälfte bzw. eine zweite äußere Gehäusehülse der zweiten Kupplungshälfte gebildet sein. Jedes Anschlusskupplungsteil bildet ein das zugehörige Absperrelement unmittelbar umgebendes Lagergehäuse, in dem das Absperrelement schraub-rollbewegbar rollt.

In jedem Fall kommt es darauf an, dass die Steuerkurven, die mit schräg zur Kupplungsachse gerichteten Führungsbahnen ausgestattet sind, unmittelbar, das heißt ohne Zwischenschaltung weiterer Kulissenführung an den Absperrelementen angeordnet bzw. an dessen Wänden ausgebildet sind, um die Schraub-Rollbewegung, die als solche nicht translatorisch ist, bewirken zu können.

Wenngleich es denkbar ist, dass die Ventileinrichtungen zum Beispiel block-, stößel-oder kolbenartige Ventilelemente aufweisen, so erhält man eine besonders bevorzugte und vorteilhafte Gestaltung dadurch, dass die erste bzw. zweite Ventileinrichtung durch ein erstes bzw. zweites Schaft/Hülsen-Ventil gebildet sind, das zum Durchströmen von Medium einen hohlen ersten bzw. zweiten Ventilschaft, gebildet durch das erste bzw. zweite Durchlasselement, sowie zugehörig eine erste bzw. zweite Ventilhülse, gebildet durch das erste bzw. zweite Absperrelement, umfasst, wobei jeweils der Ventilschaft an seinem leitungsseitigen Ende mit anzuschließender Leitung verbindbar und an seinem kuppelseitigen anderen Ende endseitig geschlossen und umfangsseitig mit den Ventilöffnungen ausgebildet ist, die in Abhängigkeit von relativer axialer Position von Ventilschaft und Ventilhülse umfangsseitig dichtend geschlossen bzw. mittels wenigstens eines an einer der Ventilhülsen ausgebildeten Durchgangs in abgedichteter Durchströmungsverbindung sind.

Schaft und Hülse der Ventileinrichtungen befinden sich jeweils im zylindrischen Dichtsitz, der zweckmäßig Ringdichtungen, z. B. in Form vom O-Ringen umfasst. Die erfindungsgemäße Schraub-Rollbewegung wirkt dem sogenannten Stick-Slip-Effekt entgegen, der besonders auftritt, wenn im zylindrischen Dichtsitz befindliche Ventilelemente relativ zueinander translatorisch bewegt werden.

Eine besonders einfache Bauform der einseitig angeordneten und antreibenden Betätigungseinrichtung besteht darin, dass das Betätigungselement mit einem radialen Antriebs-Steuerelement ausgestattet ist, das in eine Führungsbahn einfasst und den Umfangs-Drehantrieb nur an dem einen der beiden Absperrelemente bewirkt. Die Kurvenform der Antriebs-Führungsbahn kann einfach nach Maßgabe gewünschter Drehuntersetzung zwischen dem Betätigungselement und dem angetriebenen Absperrelement gestaltet werden. Um die Schraub-Rollbewegung des Koppelverbunds in gewünschtem Maß zu bewirken, kommt es im Übrigen auf den Steigungsunterschied zwischen der Antriebs-Führungsbahn bzw. dessen Steuerkurve und den die Schraub-Rollbewegung steuernden Steuerkurven an. Nach einer zweckmäßigen Ausgestaltung der Erfindung ist die Antriebs-Führungsbahn eine Linearkurve, die weiter vorteilhaft zur Kupplungsachse parallel sein kann. Andere Kurvenformen, zum Beispiel Sinus-Quadrat-Kurven, können eingerichtet werden. In jedem Fall ist es zum Bewirken der Schraub-Rollbewegung erforderlich, dass in der einen Kupplungshälfte die Führungsbahn der Steuerkurve zwischen das Absperrelement und die Antriebs-Führungsbahn geschaltet ist.

Eine bevorzugte Ausgestaltung der Betätigungseinrichtung in Verbindung mit der Kupplungsverbindung besteht darin, dass die die beiden Anschlusskupplungsteile verbindende Kupplungsverbindung einen Umfangs-Verschlussrand aufweist, der an dem Anschlusskupplungsteil der von dem Betätigungselement freien Kupplungshälfte ausgebildet ist, dass das Betätigungselement kuppelseitig mit radialen Verschlusselementen verbunden ist, die in axial gesicherter Verbindung der beiden Kupplungshälften hinter den Umfangs-Verschlussrand fassen und an diesem in Umfangsrichtung bewegbar geführt sind, und dass das Anschlusskupplungsteil der mit dem Betätigungselement ausgestatteten ersten Kupplungshälfte kuppelseitig Vorsprünge aufweist, die zur drehfesten Verbindung der Anschlusskupplungsteile in Ausnehmungen des Verschlussrandes einfassen, wobei die radialen Verschlusselemente mit den Randausnehmungen derart korrespondieren, dass sie zum Herstellen und Lösen der Kupplungsverbindung durch die Randausnehmungen hindurchführbar sind. Bei definierter Schließ- und Öffnungsstellung der Ventileinrichtungen sowie im Dreh-Betätigungsbereich des Betätigungselements zwischen diesen beiden Stellungen kann die axial gesicherte und drehfeste Verbindung der Anschlusskupplungsteile hergestellt werden.

Auf die genannten und noch andere zweckmäßige und vorteilhafte Ausgestaltungen der Erfindung sind Unteransprüche gerichtet. Merkmale der Ausgestaltungen führen in jeder Kombination zu der erfindungsgemäßen wesentlichen Lösung, so dass diese nicht auf konkret beschriebene Ausführungsbeispiele eingeschränkt ist, sondern auch wesentliche Einzelmaßnahmen insbesondere der Ausführungsbeispiele ohne die Gesamtheit der Merkmale beschriebener Ausgestaltungen in Unterkombination schutzbegründend sind. Jedes Teilmerkmal eines Ausführungsbeispiels ist als Teilmerkmal weiterer, nicht dargestellter Ausgestaltungen zu verstehen. Lediglich besonders zweckmäßige und vorteilhafte Ausbildungsformen und -möglichkeiten der Erfindung werden anhand der folgenden Beschreibung der in der schematischen Zeichnung dargestellten Ausführungsbeispiele näher beschrieben. Es zeigen
- Fig. 1A: in axonometrischer Längsansicht und teilweiser Schnittdarstellung eine erfindungsgemäße Kupplungsvorrichtung mit geschlossenen Ventileinrichtungen,
- Fig. 1B und 1C: Ansichten von Längsschnitten der Kupplungsvorrichtung im Zustand gemäß Fig. 1A,
- Fig. 1D und 1E: in axonometrischer Stirnansicht die kuppelseitigen Seiten der zum Kuppeln bereiten Kupplungshälften der Kupplungsvorrichtung gemäß Fig. 1A,
- Fig. 2A: in axonometrischer Längsansicht und teilweiser Schnittdarstellung die Kupplungsvorrichtung gemäß Fig. 1A mit geöffneten Ventileinrichtungen,
- Fig. 2B und 2C: Ansichten von Längsschnitten der Kupplungsvorrichtung im Zustand gemäß Fig. 2A,
- Fig. 3A: in axonometrischer Längsansicht und teilweiser Halbschnittdarstellung eine erfindungsgemäße Kupplungsvorrichtung eines anderen Ausführungsbeispiel mit geschlossenen Ventileinrichtungen und
- Fig. 3B: in axonometrischer Längsansicht und im Halbschnitt die Kupplungsvorrichtung gemäß Fig. 3A mit geöffneten Ventileinrichtungen.

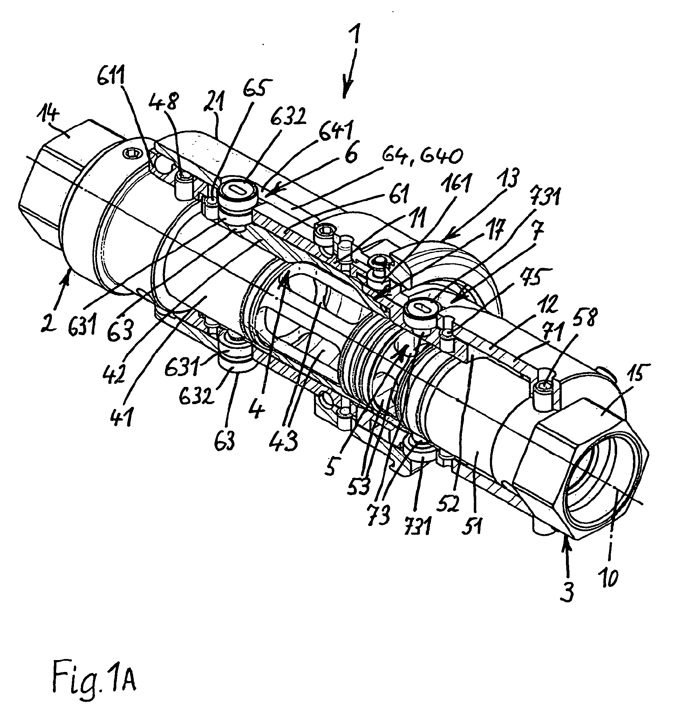

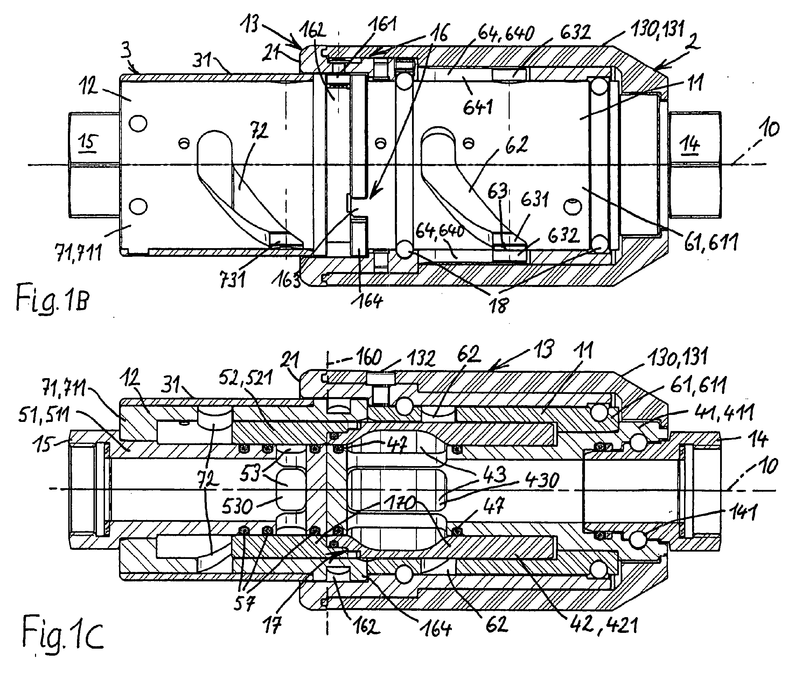

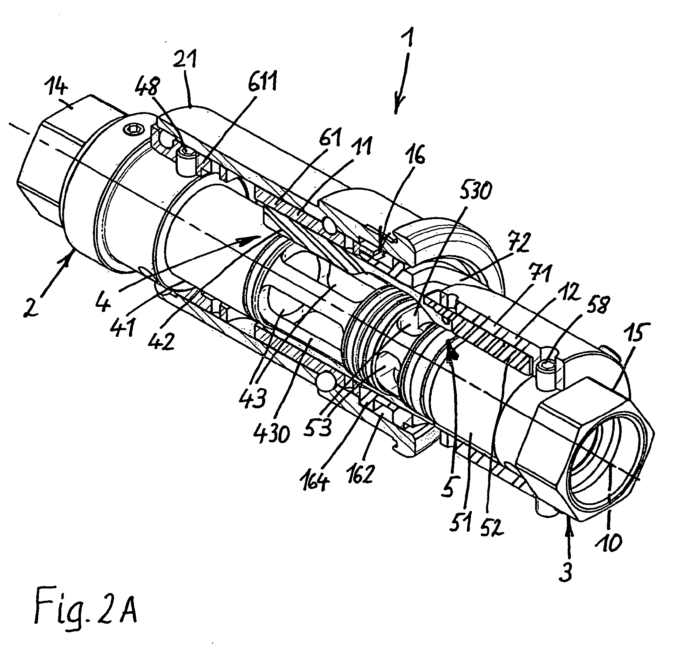

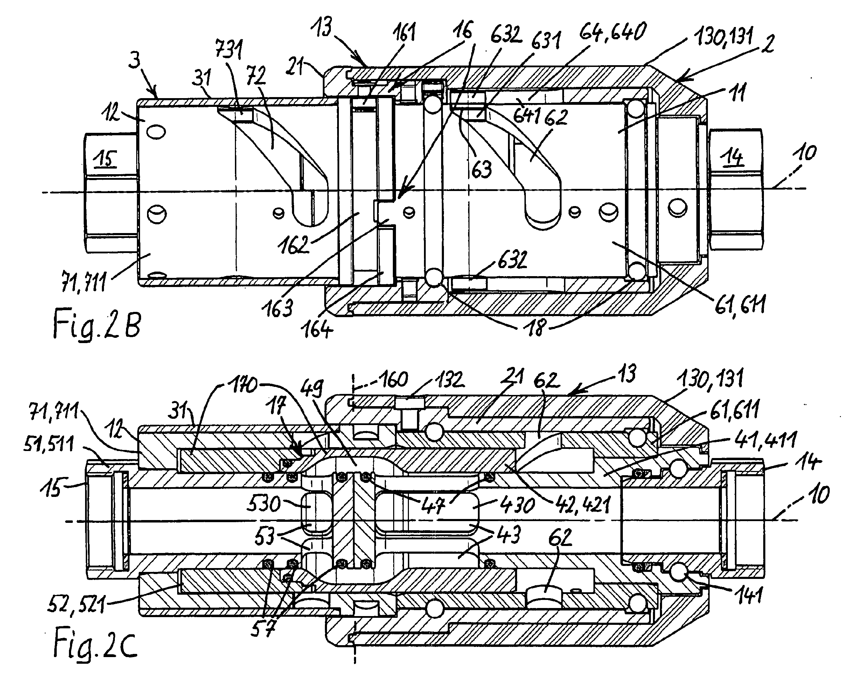

Gemäß einem ersten Ausführungsbeispiel befindet sich eine erfindungsgemäße Kupplungsvorrichtung 1 in Fig. 1A, 1B und 1C im Ventilschließzustand, während die Fig. 2A, 2B und 2C den Ventilöffnungszustand dieser Kupplungsvorrichtung 1 zeigen. Insoweit wird unter Ventilschließzustand der Zustand verstanden, in dem eine erste Kupplungshälfte 2 und eine zweite Kupplungshälfte 3 der gekuppelten Kupplungsvorrichtung 1 jeweils mittels einer ersten Ventileinrichtung 4 bzw. einer zweiten Ventileinrichtung 5 für Strömungsdurchgang gesperrt sind, sich aber insbesondere noch in drehfester und axial gesicherter Kupplungsverbindung 16 befinden. Die Steuerung kann auch so eingerichtet sein, dass die Kupplungsverbindung zeitgleich mit dem Sperren der Strömungsdurchgänge entkuppelt wird. Unter dem Ventilöffnungszustand wird stets verstanden, dass die beiden Kupplungshälften der gekuppelten Kupplungsvorrichtung 1 jeweils zum Durchlassen von Medium geöffnet sind, und zwar in drehfester und axial gesicherter Kupplungsverbindung 16.

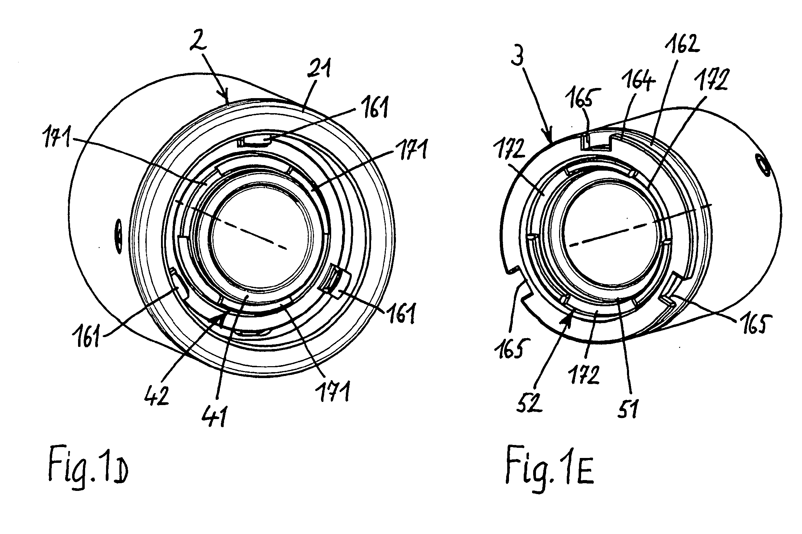

Wie aus Fig. 1A bis 1C und 2A bis 2C ersichtlich, bestimmen die beiden Kupplungshälften 2, 3 eine Kuppungsachse 10, und die Kupplungsverbindung 16 weist eine Trennebene 160 auf. Fig. 1D und 1E zeigen die kuppelseitigen Enden der beiden Kupplungshälften 2, 3 nach Trennen bzw. vor Herstellen der Kupplungsverbindung 16. In Fig. 1A und 2A ist die Kupplungsvorrichtung 1 frei von einer Griff /Betätigungshülse 131 der ersten Kupplungshälfte 2 und frei von einer Kupplungsgehäusehülse 31 der zweiten Kupplungshälfte 3 dargestellt, um die Darstellung übersichtlich zu halten. Die Kupplungshälfte 2 bildet ein Mutterteil, während die zweite Kupplungshälfte 3 das zugehörige Vaterteil ist. Wie aus Fig. 1B, 1C und 2B, 2C ersichtlich, weist die erste Kupplungshälfte 2 eine im Folgenden auch als erste Gehäusehülse bezeichnete Kupplungsgehäusehülse 21 auf, in die die im Folgenden auch als zweite Gehäusehülse bezeichnete Hülse 31 des Vaterteils sowie ein Anschlusskupplungsteil 12, an dem die Gehäusehülse 31 1 fest ist, hineinfassen. Die Kupplungsverbindung 16 stellt, wie dies noch näher beschrieben wird, eine Verbindung zwischen dem Anschlusskupplungsteil 12 der zweiten Kupplungshälfte 3, einem Anschlusskupplungsteil 11 der ersten Kupplungshälfte 2 und der Gehäusehülse 21 her.

Die erste Ventileinrichtung 4 der ersten Kupplungshälfte 2 umfasst ein erstes Durchlasselement 41 mit einer ersten Ventilöffnung 43 sowie ein erstes Absperrelement 42, das die erste Ventilöffnung 43 schließt und öffnet. Im Ausführungsbeispiel ist die erste Ventileinrichtung 4 durch ein Schaft-/Hülsenventil gebildet, das zum Durchströmen von Medium einen hohlen ersten Ventilschaft 411, gebildet durch das erste Durchlasselement 41, sowie eine den ersten Ventilschaft 411 aufnehmende erste Ventilhülse 421, gebildet durch das erste Absperrelement 42, umfasst. Der Ventilschaft 411 ist an dem der Kuppel-/Trennseite abgewandten leitungsseitigen Ende mittels Drehgelenk 141 mit einem Leitungsanschlusselement 14 drehbar verbunden. Das Drehgelenk 141 erlaubt eine Drehbewegung des Leitungsanschlusselements 14 um die Kupplungsachse 10 relativ zu dem ersten Ventilschaft 411.

Der Ventilschaft 411 ist an seinem kuppelseitigen Ende endseitig geschlossen und umfangsseitig mit der ersten Ventilöffnung 43 ausgebildet, die über den Umfang gleichmäßig in erste Öffnungsfenster 430 unterteilt ist. Die erste Ventilhülse 421 lagert und umschließt den ersten Ventilschaft 411 derart, dass sie in einer in Axialrichtung eingefahrenen Innenposition, in der sie die erste Ventilöffnung 43 schließt, kuppelseitig an der Trennebene 160 endet, sowie in einer in Axialrichtung ausgefahrenen Außenposition, in der sie bei verbundenen Kupplungshälften 2, 3 einen Teil der ersten Ventilöffnung 43 freigibt, über die Trennebene 160 hinausragt.

Die erste Ventilhülse 421 weist einen kuppelseitigen inneren Wandabschnitt auf, der eingezogen ist bzw. zurückspringt. Dieser Wandabschnitt bildet einen sich axial erstreckenden Durchgangsweg 49 , der im ausgefahrenen Zustand der ersten Ventilhülse 421 einen Durchgang zwischen der ersten Ventilöffnung 43 und einer als zweite Ventilöffnung 53 bezeichneten Ventilöffnung der zweiten Ventileinrichtung 5 herstellt, wie dies insbesondere aus Fig. 2A und 2C ersichtlich ist. Hingegen ist der Durchgangsweg 49 in der Ventil-Schließposition unwirksam, und er befindet sich nicht im Bereich der zweiten Ventilöffnung 53, wie dies insbesondere aus Fig. 1A und 1C ersichtlich ist.

Die zweite Ventileinrichtung 5 umfasst ein zweites Schaft-/Hülsenventil. Ein hohler zweiter Ventilschaft 511 ist durch das zweite Durchlasselement 51 gebildet. Eine zugehörige zweite Ventilhülse 521 umschließt und lagert den zweiten Ventilschaft 511. Der zweite Ventilschaft 511 ist an seinem leitungsseitigen Ende mit einem Leitungsanschlusselement 15 ausgestattet, das eine nicht dargestellte Leitung, insbesondere auch in Form eines Anschlussstutzens, mit der zweiten Kupplungshälfte 3 drehfest verbindet, so dass die zweite Kupplungshälfte 3 mit angeschlossener Leitung als um die Kupplungsachse 10 nicht drehendes, ortsfestes Bauteil betrachtet werden kann.

Das erste Durchlasselement 41 und das zweite Durchlasselement 51 sind stehende, das heißt mit dem ortsfesten Bauteil feste, nicht drehende Ventilelemente, die an der Trennebene 160 aneinandersitzen.

Wie insbesondere aus Fig. 1A und 1C im Vergleich mit Fig. 2A und 2C ersichtlich, befindet sich die zweite Ventilhülse 521 im geschlossenen Ventilzustand in einer ausgefahrenen Position, in der sie die zweite Ventilöffnung 53, die über den Umfang gleichmäßig in zweite Öffnungsfenster 530 unterteilt ist, schließt. In dieser Position erstreckt sich die Ventilhülse 521 bis an die Trennebene 160, und sie bildet mit kuppelseitig innerem Rand 164 einen Bestandteil des Kupplungsmundes der zweiten Kupplungshälfte 3 (Fig. 1 E).

Erfindungsgemäß sind die Absperrelemente 42, 52, nämlich im Ausführungsbeispiel die erste Ventilhülse 421 und die zweite Ventilhülse 521, im Zustand der aneinandergekuppelten Kupplungshälften 2, 3 gemeinsam in Axialrichtung hin und her rollbeweglich verfahrbar angeordnet. Zu diesem Zweck sind insbesondere drei Maßnahmen vorgesehen. Das erste Absperrelement 42 und das zweite Absperrelement 52 sind mittels einer Momente übertragenden Koppelverbindung 17 direkt drehfest aneinandergekoppelt. Die Koppelverbindung 17 wird in Axialrichtung mittels einer ersten Zwangsführungseinrichtung 6 der ersten Kupplungshälfte 2 und einer zweiten Zwangsführungseinrichtung 7 der zweiten Kupplungshälfte 3 aufrechterhalten. Zum Bewegen des damit hergestellten Koppelverbundes 170 der beiden Absperrelement 42, 52 wird ausschließlich nur ein Absperrelement, nämlich das erste Absperrelement 42 der ersten Kupplungshälfte 2 mittels eines Drehantriebs zur Drehung um die Kupplungsachse 10 angetrieben. Dieser Drehantrieb wird mittels einer Betätigungseinrichtung 13 verwirklicht. Die Kupplungsverbindung 16 des Ausführungsbeispiels weist zudem, ohne dass der Erfindungsgegenstand allgemein und jede weitere Gestaltung des Ausführungsbeispiels darauf eingeschränkt sind, Verbindungselemente auf, die in Wirkverbindung mit Elementen der Zwangsführungseinrichtungen 6, 7 angeordnet und eingerichtet sind, wobei die Verbindungselemente zusammen mit den Positionen der Ventilschließzustände und der Ventilöffnungszustände eingerichtet und darauf abgestimmt sind, derart, dass die Kupplungsverbindung 16 nur geschlossen bzw. geöffnet werden kann, wenn die VentilSchließzustände mittels der Zwangsführungseinrichtungen 6, 7 gesichert sind.

Wie aus Fig. 1A, 1C, 1D, 1E, 2A und 2C ersichtlich, umfasst die Momenten-Koppelverbindung 17 an dem ersten Absperrelement 42 kuppelseitig im Umfangsabstand von 120° angeordnete Steckfedern 171, während das Absperrelement 52 kuppelseitig mit korrespondierenden Verschluss- und Passnuten 172 ausgestattet ist. Die Steckfedern 171 und Nuten 172 bilden eine spielfreie Formschlussverbindung, die die Drehmomente in beide Drehrichtungen der kuppelseitig aneinandergesteckten Absperrelemente 42, 52 überträgt. In gesteckter formschlüssiger Verbindung bilden die beiden Absperrelemente 42, 52 den Koppelverbund 170. Für die erfindungsgemäße Koppelverbindung 17 kommt es lediglich darauf an, dass Drehmomente, mit denen das erste Absperrelement 42 beaufschlagt wird, auf das zweite Absperrelement 52 übertragen werden, während die beiden Absperrelemente 42, 52 bei gekuppelten Kupplungshälften 2, 3 gegeneinander sitzen bzw. beim Entkoppeln frei voneinander trennbar sind. Bei der erfindungsgemäßen Momentenkoppelverbindung kommt es allgemein auf eine formschlüssige Verbindung an, die die Momentenkopplung von dem antreibenden Absperrelement 42 auf das abtriebsseitige Absperrelement 52 herstellt. Es kann z. B. eine wechselseitige Kronenverzahnung ausgebildet sein.

Die erste Zwangsführungseinrichtung 6 umfasst als Steuermittel eine erste Steuerhülse 61, die zu dem Ausführungsbeispiel der Fig. 1A bis 2C zudem mit 611 bezeichnet ist. Die erste Steuerhülse 611 ist ein Lager- und Führungsgehäuse, das das Absperrelement 42, nämlich die erste Ventilhülse 421 umschließt, wobei sie unmittelbar und passgenau zwischen der ersten Gehäusehülse 21 und dem ersten Absperrelement 42 angeordnet ist. Die erste Steuerhülse 611 ist mit dem ersten Ventilschaft 411 fest verbunden. Diese Verbindung kann, wie aus Fig. 1A und 2A ersichtlich, eine Stiftverbindung 48 sein, die dort im Bereich des leitungsseitigen Endabschnitts der ersten Steuerhülse 611 ausgebildet ist.

Die erste Steuerhülse 611 umfasst zwei erste Steuerkurven 62. Diese sind, wie insbesondere aus Fig. 1B und 2B ersichtlich, in Umfangsrichtung in gleichem Abstand aufeinanderfolgend in je einer Umfangshälfte angeordnet. In Abwicklung betrachtet verlaufen die Steuerkurven 62 mit die Schraub-Rollbewegung bestimmender Steigung schräg zur Hülsenachse. An ihren Enden weisen sie gerade, zur Hülsenachse senkrechte, kurze Kurvenabschnitte auf. Die Kurven 62 sind die Wand der ersten Steuerhülse 611 durchbrechende Schlitzkulissen. Jeder Steuerkurve 62 ist ein sich radial erstreckender zapfenartiger Steuersteg 63 zugeordnet, der an dem ersten Absperrelement 42, also an der ersten Ventilhülse 421 fest ist. Der Steuersteg 63 trägt nach Art eines Kulissensteins ein inneres Führungselement 631, z. B. in Form eines Gleit- oder Rollelements, das in die zugeordnete erste Steuerkurve 62 einfasst. Die erste Steuerhülse 61 sitzt in der ersten Gehäusehülse 21 der Kupplungshälfte 2. Sämtliche Hülsen, nämlich von innen nach außen der erste Ventilschaft 411, die erste Ventilhülse 421, die erste Steuerhülse 611 und die erste Kupplungsgehäusehülse 21 sind zylinderförmig mit Kreisquerschnitten, und sie befinden sich in koaxialer Anordnung.

An jedem Steuersteg 63 ist ein weiteres, äußeres Führungselemente 632 z. B. in Form eines Gleit- oder Rollelements angeordnet. Dem äußeren Führungselement 632 ist eine Führungsbahn zugeordnet, die im Ausführungsbeispiel eine Linearkurve 640 ist, die zur Achse der ersten Kupplungsgehäusehülse 21 parallel ist und durch eine schlitzartige Durchbrechung in der Wand dieser Hülse gebildet ist. Die erste Kupplungsgehäusehülse 21 ist relativ zu der ersten Steuerhülse 61 um die Kupplungsachse 10 bzw. die Achse der ersten Kupplungshälfte 2 drehbar. Im Ausführungsbeispiel sind zwischen der ersten Kupplungsgehäusehülse 21 und der mit dem ersten Ventilschaft 411 festen ersten Steuerhülse 611 Kugellager 18 angeordnet.

Die Hülse 21 ist Bestandteil einer Betätigungseinrichtung 13. Diese ist mit sämtlichen Bauteilen aus Fig. 1B, 1C, 2B und 2C ersichtlich. Sie umfasst ein Betätigungselement 130, das in Form der Griffhülse 131 drehfest, im Beispiel durch Stiftverbindung 132 (Fig. 1C, 2C), mit der ersten Gehäusehülse 21 verbunden ist. Die Griffhülse 131 schließt damit auch als äußere Gehäusehülse die erste Kupplungshälfte 2 nach außen ab. Das Betätigungselement 130 ist ein Dreh-Antriebselement, das im Zusammenwirken mit dem äußeren Führungselement 632, also allgemein mit dem radialen Steuersteg 63, und nach Maßgabe der Antriebsführungsbahn 64 den ausschließlich an der Kupplungshälfte 2 vorgesehenen Drehantrieb für das nur erste Absperrelement 42 bildet.

Die zweite Zwangsführungseinrichtung 7 ist Bestandteil der zweiten Kupplungshälfte 3. Sie umfasst eine zweite Steuerhülse 71, die im Ausführungsbeispiel auch mit 711 bezeichnet ist. Sie bildet ein Lager- und .Führungsgehäuse, das das zweite Absperrelement 52, nämlich die zweite Ventilhülse 521 umgibt, wobei sie unmittelbar und passgenau zwischen der zweiten Gehäusehülse 31 und dem zweiten Absperrelement 52 angeordnet ist. Die zweite Steuerhülse 71 ist fest mit dem zweiten Durchlasselement 51 verbunden, und zwar im Ausführungsbeispiel mittels Stiftverbindung 58 im leitungsseitigen Endbereich der Kupplungshälfte 3.

Die zweite Steuerhülse 71 ist mit Steuerkurven 72 ausgestattet, die den ersten Steuerkurven 62 der ersten Zwangsführungseinrichtung 6 entsprechen. Das heißt, dass die Steuerkurven 62, 72 zur zeit- und ortsgleichen Bewegungsteuerung führungsgleich ausgebildet sind. Wie aus Fig. 1B und 2B ersichtlich, werden die beiden Steuerkurven 72 durch schlitzartige Wanddurchbrechungen der zweiten Steuerhülse 71 gebildet, die über den Umfang aufeinanderfolgend jeweils in einer Umfangshälfte angeordnet und mit schrägem Steuerabschnitt sowie geraden, kurzen Kurvenenden übereinstimmend und gleich orientiert ausgebildet sind.

Jeder zweiten Steuerkurve 72 ist ein zapfenartiger Steuersteg 73 zugeordnet, der an dem zweiten Absperrelement 52, also an der zweiten Ventilhülse 521 fest ist. An dem Steuersteg 73 ist in Form eines Kulissensteins ein Führungselement 731, zum Beispiel ein Gleit- oder Rollelement angeordnet, das in die zugehörige zweite Steuerkurve 72 einfasst. Die Steuerhülse 71 ist, wie dies aus Fig. 1B, 1C, 2B und 2C hervorgeht, unmittelbar zwischen der Gehäusehülse 31 und dem Absperrelement 52 angeordnet. Gleichermaßen wie die erste Steuerhülse 61 in Verbindung mit dem ersten Durchlasselement 41 ist die zweite Steuerhülse 71 in Verbindung mit dem zweiten Durchlasselement 51 als feststehende Anordnung zu betrachten, gegenüber der der Koppelverbund 170 mit Schraub-Rollbewegung drehbar ist. Sämtliche Hülsen, nämlich von innen nach außen der zweite Ventilschaft 511, die zweite Ventilhülse 521, die zweite Steuerhülse 711 und die zweite Kupplungsgehäusehülse 31 sind zylinderförmig mit Kreisquerschnitten und befinden sich in koaxialer Anordnung.

Die Kupplungsverbindung 16, die die beiden Kupplungshälften 2, 3 im gekuppelten Zustand miteinander verbindet, ist gemäß Ausführungsbeispiel im Einzelnen aus Fig. 1A bis 2C ersichtlich.

Einerseits bildet die erste Steuerhülse 611 das Anschlusskupplungsteil 11, und andererseits wird das Anschlusskupplungsteil 12 durch die zweite Steuerhülse 711 gebildet. Am kuppelseitigen Ende der zweiten Steuerhülse 711 ist umlaufend eine Umfangs-Verschlussnut 162 ausgebildet. In eine stirnseitige Nutwand, die einen Umfangs-Verschlussrand 164 bildet, sind im Umfangsabstand von 120° Axialnuten bildende Ausnehmungen 165 ausgebildet, wie dies insbesondere aus Fig. 1B, 1E und 2B ersichtlich ist. Das erste Anschlusskupplungsteil 11 ist kuppelseitig mit einem Stirnrand versehen, der durch achsparallele Steckfedern gebildete Vorsprünge 163 aufweist, die mit den Ausnehmungen 165 korrespondieren, wie dies insbesondere aus Fig. 1D, E ersichtlich ist. In der Kupplungsverbindung 16 fassen die axialen Vorsprünge 163 in die Ausnehmungen 165 formschlüssig ein, so dass die Anschlusskupplungsteile 11, 12 drehfest miteinander verbunden sind. Die Ventilschäfte 411 und 511 sind so dimensioniert und fest mit den Anschlusskupplungsteilen 11, 12 verbunden, dass die Schaftköpfe bei mittels der Kupplungsverbindung 16 geschlossenen Kupplungsvorrichtung 1 auf Stoß dichtend aneinandersitzen. In dieser Verschlussposition wird die Kupplungsverbindung 16 axial durch radiale Verschlusselemente 161 gesichert, die an der Kupplungshälfte 2 angeordnet sind und in die Ausnehmungen 165 einfassen, wobei sie den Umfangs-Verschlussrand 164 hinterfassen und gegen diesen in Gleitführung anliegen. Die Dimensionierung ist derart, dass die Anschlusskupplungsteile 11, 12 bzw. die Ventilschäfte 411, 511 in der Verschlussverbindung 16 gegeneinandergezogen werden.

Jedes Verschlusselement 161 ist durch einen Zapfen mit Roll- oder Gleitelement gebildet und fest an dem Betätigungselement 130 mit radialer Ausrichtung angeordnet, und zwar gleichermaßen wie die Ausnehmungen 165 im Umfangsabstand von 120°. Die korrespondierende Verschlussanordnung ist dabei derart, dass die Verschlusselemente 161 zum Schließen und Öffnen der Kupplungsverbindung 16 in achsparallelen Richtungen fluchtend vor den Vorsprüngen 163 zu liegen kommen, so dass sie beim Kuppeln bzw. Entkuppeln durch die Ausnehmungen 165 geführt werden.

Man erkennt, dass die Verschlusselemente 161, ausgehend von ihren Durchgangspositionen an den Ausnehmungen 165 durch Drehverstellung des Betätigungselements 130 in der Umfangs-Verschlussnut 162 gefangen sind, so dass sich die Kupplungsverbindung 16 in drehfester und axial gesicherter Verbindung befindet. Im Ausführungsbeispiel ist der Drehbereich des Betätigungselements 130 120°, nämlich entsprechend der Umfangsteilung für die Verschlusselemente 161, die Steckfedern 163 und die Ausnehmungen 165. An diese Teilung sind auch die Steuerkurven 62, 72 mit ihren schrägen und kurzen Endabschnitten angepasst. Aus den beschriebenen Einrichtungen und Anordnungen resultieren die Funktionen und Betriebsweisen der dargestellten Kupplung.

Gemäß Fig. 1A bis 1C ist das Betätigungselement 130 in drehfester und gesicherter Kupplungsverbindung 16 so positioniert, dass die Ventileinrichtungen 5, 6 jeweils den Strömungsdurchgang sperren. Die Führungselemente 632 befinden sich jeweils in einem geraden Endabschnitt der beiden ersten Steuerkurven 62. In dieser Position befindet sich das äußere Führungselement 632 in eingefahrener Endposition in einer die Antriebsbahn 64 bildenden Kulisse 641. Gleichermaßen befinden sich die Führungselemente 731 jeweils in dem zugehörigen geraden Endabschnitt der zweiten Steuerkurven 72. Die erste Ventilhülse 421 schließt die erste Ventilöffnung 43, und die zweite Ventilhülse 521 schließt die zweite Ventilöffnung 53. Die Ventilöffnungen 43, 53 sind mittels der Ventilhülsen 421, 521 parallel zur Kupplungsachse 10 und damit zu den Strömungsrichtungen in den beiden Ventilschäften 411,511 geschlossen. Infolgedessen herrscht beim Öffnen Druckneutralität. Beim Kuppeln unter Druck werden unerwünschte Volumenänderungen weitgehend vermieden.

Zum Öffnen der Ventileinrichtungen 4, 5 wird das Betätigungselement 130 um 120° gedreht. Man erhält die in Fig. 2A bis 2C dargestellten Positionen. Die Führungselemente 631 bzw. 731 gelangen in den zugehörigen Kulissen der Steuerkurven 62, 72 in den anderen geraden Endabschnitt. Die äußeren Führungselemente 632 werden längs der beiden zugehörigen Führungsbahnen 64 zur Trennebene 160 hin verschoben. Die Ventilhülsen 421, 521 gelangen in ihre die Ventilöffnungen 43, 53 öffnenden Positionen, die dann durch den Durchgang 49 verbunden sind.

Beim Drehen des Betätigungselements 130 um die Kupplungsachse 10 wird unmittelbar nur die erste Ventilhülse 421 durch Führung der äußeren Führungselemente 632 längs der Kulissen 641 der Führungsbahnen 64 zum Drehen um die Kupplungsachse 10 getrieben. Das die erste Ventilhülse 421 beaufschlagende Drehmoment wird mittels der Koppelverbindung 17 auf die zweite Ventilhülse 521 übertragen. Die gleichermaßen vorgesehenen Schrägführungen der Steuerkurven 62, 72 zwischen den geraden Endabschnitten sorgen dafür, dass sich die beiden im Koppelverbund 170 befindlichen Ventilhülsen 421, 521 innerhalb der Steuerhülsen 611, 711 schraubend und rollend aus den Schließpositionen in die Öffnungspositionen der Ventileinrichtungen 4, 5 bewegen.

Zum Schließen der Ventileinrichtungen 4, 5 und Lösen der Kupplungsverbindung 16 erfolgt der beschriebene Bewegungsablauf umgekehrt. Infolge der Zwangsführung mittels der Steuerkurven 72 wird die zweite Ventilhülse 521 aus der in Fig. 2C dargestellten eingefahrenen Position in die in Fig. 1C dargestellte ausgefahrene Position zurückgeholt, und zwar ohne dass die zweite Ventilhülse 521 an der Kupplungshälfte 3 von außen getrieben wird. Auch in dieser Rückholphase kommt es erfindungsgemäß auf die Momentenübertragung von der ersten Ventilhülse 421 auf die zweite Ventilhülse 521 an.

Die geraden, zu den Hülsenachsen bzw. zur Kupplungsachse 10 senkrechten Endabschnitte der Steuerkurven 62, 72 bilden beim Drehen des Betätigungselements 130 jeweils einen definierten Dreh-Freilauf des Betätigungselements 130 vor Beginn und Ende der Schraub-/Rollbewegung des Koppelverbundes 170. Damit sind Elemente ausgebildet, mit denen die Öffnungs- und Schließpositionen der Ventileinrichtungen 4, 5 zum Kuppeln bzw. Entkuppeln der Kupplungshälften 2, 3 besonders gesichert werden können. Im Ausführungsbeispiel sind den Endabschnitten der Steuerkurven 62, 72 weiterhin federnde Druckstücke 65, 75 zugeordnet, die die Absperrelemente 42, 52 in den zugehörigen Endpositionen entriegelbar arretieren. Die Freilaufsteuerung kann auch allgemein sowie in Abänderung des Ausführungsbeispiels entfallen.

Die Ventilhülsen 421, 521 und die Ventilschäfte 411, 511 befinden sich im zylindrischen Dichtsitz mit Ringdichtungen, nämlich im Ausführungsbeispiel mit O-Ringen 47, 57. Die erfindungsgemäße Schraub-Rollbewegung wirkt dem Stick-Slip-Effekt entgegen.

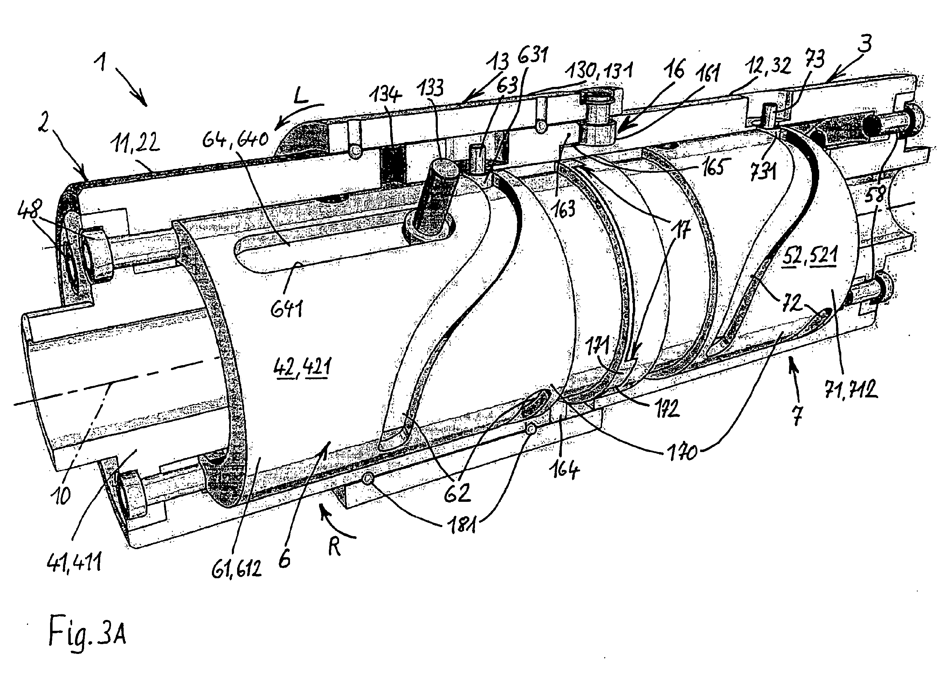

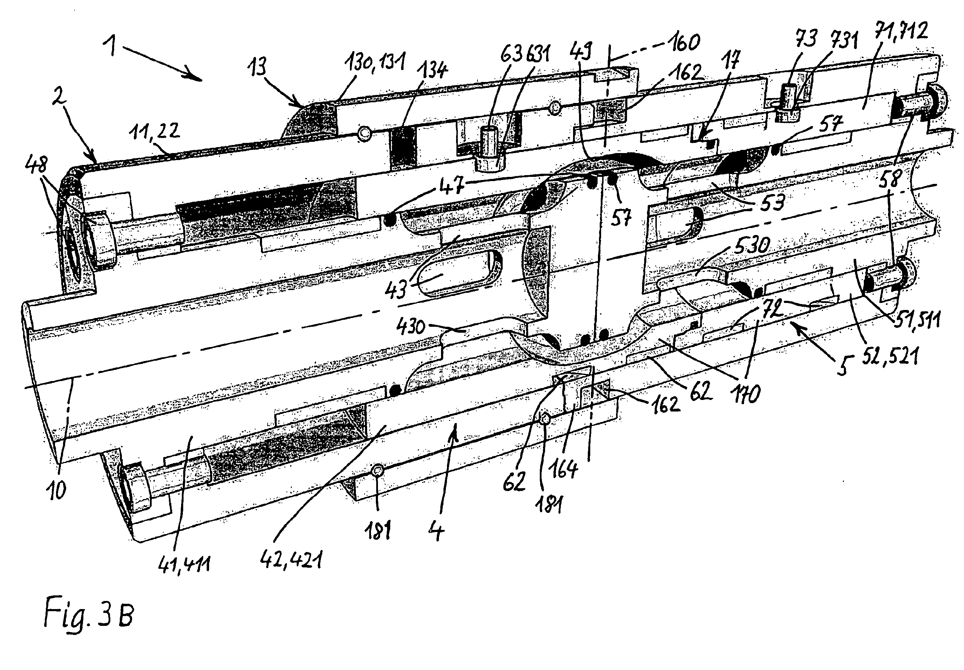

Ein Ausführungsbeispiel gemäß Fig. 3A und 3B verwirklicht die gleichen Bewegungsabläufe, wie Sie anhand des ersten Ausführungsbeispiels der Fig. 1A bis 2C beschrieben worden sind. Bauteile, deren Funktionen und Gestaltungen denen des ersten Ausführungsbeispiels entsprechen, werden daher mit gleichen Bezugszeichen versehen. In der folgenden Beschreibung werden Unterschiede der konstruktiven Anordnung beschrieben und hervorgehoben.

Steuerhülsen 612 und 712, die die erste bzw. zweite Steuerhülse 61, 71 bilden, sind Bestandteile der Absperrelemente 42, 52. Die Steuerkurven 62, 72 sind jeweils in Form einer Führungsnut in der bereits beschriebenen Gestaltung und Umfangsanordnung am Außenumfang jeweils des ersten und zweiten Absperrelements 42, 52 ausgebildet. Die Antriebs-/Führungsbahn 64 ist durch eine eine Linearkurve 640 ausbildende achsparallele Kulisse 641 gebildet, die in Form einer Nut am Außenumfang des ersten Absperrelements 42 ausgebildet ist.

In die Nuten der Steuerkurven 62, 72 fassen Führungselemente 631, 731 zapfenartiger Steuerstege 63, 73 ein, die einerseits an einer Gehäusehülse 22 einer ersten Kupplungshälfte 2 und andererseits an einer Gehäusehülse 32 einer zweiten Kupplungshälfte 3 fest sind. Die Gehäusehülse 22 ist mittels Stiftverbindung 48 mit einem ersten Durchlasselement 41 fest verbunden. Das zweite Kupplungsgehäuse 32 ist mittels einer Stiftverbindung 58 mit einem zweiten Durchlasselement 51 fest verbunden.

Ein Betätigungselement 130 in Form einer Griffhülse 131 umgibt das erste Absperrelement 42 und ist an diesem mit Kugellagern 181 um die Hülsenachse bzw. die Kupplungsachse 10 drehbar gelagert.

Wie im ersten Ausführungsbeispiel, bilden die Durchlasselemente 41, 51 einen ersten Ventilschaft 411 bzw. einen zweiten Ventilschaft 511. Das erste Absperrelement 42 und das zweite Absperrelement 52 sind in der gleichen Weise wie im erste Ausführungsbeispiel durch eine erste Ventilhülse 421 bzw. eine zweite Ventilhülse 521 gebildet. Diese befinden sich in der oben beschriebenen Momenten-Koppelverbindung 17 mit Steckfedern 171 und Verschlussnuten 172. Mittels der Koppelverbindung 17 und der durch die Steuerhülsen 612, 712 gebildeten ersten Zwangsführungseinrichtung 6 bzw. zweiten Zwangsführungseinrichtung 7 ist der Koppelverbund 170 ausgebildet. Diese erste Ventilhülse 421 ist zugleich als erste Steuerhülse 612 eingerichtet, und die zweite Ventilhülse 521 bildet zugleich die zweite Steuerhülse 712.

Die erste Kupplungsgehäusehülse 22 und die zweite Kupplungsgehäusehülse 32 bilden Anschlusskupplungsteile 11, 12, die mittels einer Kupplungsverbindung 16 in der gleichen Weise wie im ersten Ausführungsbeispiel zur drehfesten und axial gesicherten Verbindung lösbar aneinandergekuppelt sind. An der zweiten Kupplungshälfte 3 ist kuppelseitig eine Umfangs-Verschlussnut 162 ausgebildet, in die Führungselemente zapfenartiger Verschlusselemente 161, die an dem Betätigungselement 130 fest sind, einfassen. Steckfedern 163 fassen in Axialnuten bildende Ausnehmungen 165 eines umlaufenden Randes 164 an der kuppelseitigen Stirnseite der zweiten Kupplungshälfte 3 ein.

Die beiden Kupplungsgehäusehülsen 22, 32 sind Lager- und Ventilgehäuse der in ihnen rollbaren Ventilhülsen 421, 521. Schaft und Hülsen jeweils einer Kupplungshälfte 2, 3 weisen kreiszylindrische Querschnitte auf und befinden sich in koaxialer Anordnung.

In Fig. 3A ist die Kupplungseinrichtung 1 im Zustand mit geschlossenen Ventileinrichtungen 4, 5 dargestellt. In dieser Position befinden sich die Führungselemente der Verschlusselemente 161 vor den in den Ausnehmungen 165 sitzenden Steckfedern 163 im Bereich der Umfangs-Verschlussnut 162.

Das Betätigungselement 130 ist fest mit zapfenartigen Antriebs-Steuerstegen 133 verbunden. Die radialen Steuerstege 133 greifen durch Umfangsschlitze 134 hindurch, die in der Wand der ersten Kupplungsgehäusehülse 22 ausgebildet sind, und fassen mit Führungselementen in die Kulissen 641 an gegenüberliegenden Umfangsseiten des ersten Absperrelements 42 ein. Über die Steuerstege 133 ist das Betätigungselement 130 drehfest mit dem ersten Absperrelement 42 verbunden.

In Fig. 3B befindet sich die Kupplungsvorrichtung 1 im Zustand mit geöffneten Ventileinrichtungen 4, 5. Anhand der Fig. 3A, 3B werden die Positionen und der Bewegungsablauf deutlich. In Fig. 3A befindet sich das erste Absperrelement 42 in eingefahrener Position, während das zweite Absperrelement 52 eine ausgefahrene Position einnimmt. In Fig. 3A befindet sich das erste Absperrelement 42 in der ausgefahrenen Position, während das Absperrelement 52 seine eingefahrene Position einnimmt.

Um von dem Schließzustand gemäß Fig. 3A in den Öffnungszustand gemäß Fig. 3B zu gelangen, wird das Betätigungselement 130 in Richtung L gedreht, wobei das erste Absperrelement 42 bzw. die damit ausgebildete Steuerhülse 61 gleichsinnig gedreht werden, so dass das Führungselement 631 längs der Steuerkurve 62 geführt wird. Dies hat die Schraub-/Rollbewegung des Koppelverbundes 170 zur Folge, da das Führungselement 731 zugleich in der der Steuerkurve 62 entsprechenden Steuerkurve 72 geführt wird. Durch umgekehrte Drehbewegung des Betätigungselements 130 in Richtung R wird das zweite Absperrelement 52 aus der eingefahrenen Position in Fig. 3B in die ausgefahrene Position in Fig. 3A zurückgeholt.

## Patentansprüche

1. Eine Trockenkupplung bildende Kupplungsvorrichtung (1) zum dichtenden Verbinden von flüssige oder gasförmige Medien transportierenden Leitungen, umfassend eine erste Kupplungshälfte (2) und eine zweite Kupplungshälfte (3), die eine Kupplungsachse (10) bestimmen und jeweils mit einer eine erste bzw. eine zweite Ventileinrichtung (4 bzw. 5) bildenden Ventileinrichtung ausgestattet sind, die zu ihrem Öffnen und Schließen eine in zugehöriger Kupplungshälfte (2, 3) angeordnete erste bzw. zweite Zwangsführungseinrichtung (6, 7) umfasst, umfassend eine Betätigungseinrichtung (13) mit einem Betätigungselement (130), das zum Betätigen der beiden Zwangsführungseinrichtungen (6, 7) drehbewegbar um die Kupplungsachse (10) angeordnet ist, wobei die erste Ventileinrichtung (4) und die zweite Ventileinrichtung (5) ein mit erster bzw. zweiter Ventilöffnung (43, 53) versehenes erstes bzw. zweites Durchlasselement (41, 51) sowie ein erstes Absperrelement (42) bzw. ein zweites Absperrelement (52) umfassen, die jeweils die erste Ventilöffnung (43) bzw. die zweite Ventilöffnung (53) schließen bzw. öffnen, wobei die rotatorische Bewegung des Betätigungselements (130) in axiale Bewegung umgesetzt wird, die in Abhängigkeit von der Drehrichtung des Betätigungselements (130) in die eine oder die andere Richtung der Kupplungsachse (10) gerichtet ist und die Schließbewegung bzw. die Öffnungsbewegung der Absperrelemente (42, 52) bewirkt, und umfassend in drehfester und axial gesicherter Kupplungsverbindung (16) lösbar verbundene Anschlusskupplungsteile (11, 12), **dadurch gekennzeichnet, dass** das erste Absperrelement (42) und das zweite Absperrelement (52) mittels einer Drehmomente übertragenden, durch Formschluss hergestellten Koppelverbindung (17) direkt drehfest aneinander gekoppelt und in diesem Koppelverbund (170) gemeinsam um die Kupplungsachse (10) drehbar und in beide Richtungen der Kupplungsachse (10) zum Öffnen und Schließen der Ventilöffnungen (43, 53) verlagerbar angeordnet sind, wobei die Zwangsführungseinrichtungen (6, 7) Steuermittel (61, 64, 71) umfassen, die die Drehbewegung des Betätigungselements (130) in eine Schraub-Rollbewegung der in dem Koppelverbund (170) befindlichen Absperrelemente (42, 52) richtungsabhängig gegenläntige ßewegungen der Alospesrelemente (42, 52) ansschlieβend umsetzen, und dass das Betätigungselement (130) mit nur einem der beiden Absperrelemente (42, 52) zum Umsetzen der Rotationsbewegung des Betätigungselements (130) in die Schraub-Rollbewegung der im Koppelverbund (170) befindlichen Absperrelemente (42, 52) verbunden ist, wobei, ausgehend von Ventil-Schließpositionen beider Absperrelemente (42, 52), die Schraub-Rollbewegung in die eine Achsrichtung zum Öffnen und umgekehrt zum Schließen der Ventileinrichtungen (4, 5) führt.

2. Kupplungsvorrichtung nach Anspruch 1, **dadurch gekennzeichnet, dass** das Betätigungselement (130) eine um die Kupplungsachse (10) drehbare Griffhülse (131) ist, die an einer der beiden Kupplungshälften (2, 3) angeordnet ist.

3. Kupplungsvorrichtung nach Anspruch 1 oder 2, **dadurch gekennzeichnet, dass** die beiden Kupplungshälften (2, 3) durch ein Mutterteil bzw. ein Vaterteil gebildet sind, wobei das Mutterteil ein erstes Kupplungsgehäuse (21) aufweist, in das ein Bestandteil des Vaterteils bildendes zweites Kupplungsgehäuse (31) einfasst, und wobei die Betätigungseinrichtung (13) ausschließlich an dem Mutterteil angeordnet ist.

4. Kupplungsvorrichtung nach einem der Ansprüche 1 bis 3, **dadurch gekennzeichnet, dass** die Steuermittel der ersten und der zweiten Zwangsführungseinrichtung (6, 7) in koaxialer Anordnung mit der Kupplungsachse (10) eine erste Steuerhülse (61) bzw. eine zweite Steuerhülse (71) aufweisen, die jeweils an ihrem Umfang mit wenigstens einer ersten bzw. zweiten Steuerkurve (62, 72) zum Herbeiführen der Schraub-Rollbewegung der Absperrelemente (42, 52) ausgestattet sind, wobei die Steuerkurven (62, 72) führungsgleich ausgebildet sind.

5. Kupplungsvorrichtung nach Anspruch 4, **dadurch gekennzeichnet, dass** die Zwangsführungseinrichtungen (6, 7) in die Steuerkurven (62, 72) einfassende Steuerstege (63, 73) umfassen, die eine Steuerverbindung zwischen den Absperrelementen (42, 52) und den Anschlusskupplungsteilen (11, 12) herstellen, wobei die Anschlusskupplungsteile (11, 12) mit den zugehörigen Durchlasselementen (41, 51) fest verbunden sind.

6. Kupplungsvorrichtung nach Anspruch 4 oder 5, **dadurch gekennzeichnet, dass** die Steuerhülsen (611, 711) Bestandteile der Anschlusskupplungsteile (11, 12) sind, wobei die Steuerhülsen (611, 711) die Absperrelementen (42, 52) umgeben (Fig. 1A-2C).

7. Kupplungsvorrichtung nach Anspruch 6, **dadurch gekennzeichnet, dass** die Steuerhülsen (611, 711) zwischen Gehäusehülsen (21, 31) der Kupplungshälften (2, 3) und den Absperrelementen (42, 52) angeordnet sind.

8. Kupplungsvorrichtung nach Anspruch 4 oder 5, **dadurch gekennzeichnet, dass** die Steuerhülsen (612, 712) Bestandteile der Absperrelemente (42, 52) sind (Fig. 3A, B).

9. Kupplungsvorrichtung nach Anspruch 8, **dadurch gekennzeichnet, dass** die Anschlusskupplungsteile (11, 12) durch eine erste Gehäusehülse (22) der ersten Kupplungshälfte (2) bzw. eine zweite Gehäusehülse (32) der zweiten Kupplungshälfte (3) gebildet sind.

10. Kupplungsvorrichtung nach einem der Ansprüche 1 bis 9, **dadurch gekennzeichnet, dass** die erste bzw. zweite Ventileinrichtung (4, 5) durch ein erstes bzw. zweites Schaft/Hülsen-Ventil gebildet sind, das zum Durchströmen von Medium einen hohlen ersten bzw. zweiten Ventilschaft (411,511), gebildet durch das erste bzw. zweite Durchlasselement (41, 51), sowie zugehörig eine erste bzw. zweite Ventilhülse (421, 521), gebildet durch das erste bzw. zweite Absperrelement (42, 52), umfasst, wobei jeweils der Ventilschaft (411, 511) an seinem leitungsseitigen Ende mit anzuschließender Leitung verbindbar und an seinem kuppelseitigen anderen Ende endseitig geschlossen und umfangsseitig mit den Ventilöffnungen (43, 53) ausgebildet ist, die in Abhängigkeit von relativer axialer Position von Ventilschaft (41 1, 511) und Ventilhülse (421, 521) umfangsseitig dichtend geschlossen oder mittels wenigstens eines an einer der Ventilhülsen (421) ausgebildeten Durchgangs (49) in abgedichteter Durchströmungsverbindung sind.

11. Kupplungsvorrichtung nach einem der Ansprüche 1 bis 10, **dadurch gekennzeichnet, dass** das Betätigungselement (130) mit einem radialen Antriebs-Steuerelement (631) verbunden ist, das in eine Antriebs-Führungsbahn (64) einfasst, die nur in der einen Kupplungshälfte (2) ausgebildet ist und einen Umfangs-Drehantrieb nur an dem einen der beiden Absperrelemente (42, 52) bewirkt.

12. Kupplungsvorrichtung nach Anspruch 11, **dadurch gekennzeichnet, dass** die Antriebs-Führungsbahn (64) eine Linearkurve (640) ist, die zur Kupplungsachse (10) parallel ist.

13. Kupplungsvorrichtung nach einem der Ansprüche 1 bis 12, **dadurch gekennzeichnet, dass** die die beiden Anschlusskupplungsteile (11, 12) verbindende Kupplungsverbindung (16) einen Umfangs-Verschlussrand (164) aufweist, der an dem Anschlusskupplungsteil (11) der von dem Betätigungselement (130) freien Kupplungshälfte (3) ausgebildet ist, dass das Betätigungselement (130) kuppelseitig mit radialen Verschlusselementen (161) verbunden ist, die in axial gesicherter Verbindung der beiden Kupplungshälften (2, 3) hinter den Umfangs-Verschlussrand (164) fassen und daran in Umfangsrichtung bewegbar geführt sind, und dass das Anschlusskupplungsteil (11) der mit dem Betätigungselement (130) ausgestatteten Kupplungshälfte (2) kuppelseitige Vorsprünge (163) aufweist, die zur drehfesten Verbindung in Ausnehmungen (165) des Umfags Verschlussrandes (164) einfassen, wobei die radialen Verschlusselemente (161) mit den Randausnehmungen (165) derart korrespondieren, dass sie zum Herstellen und Lösen der Kupplungsverbindung (16) durch die Randausnehmungen (165) hindurchführbar sind.

## Claims

1. A coupling device (1) forming a dry coupling for the sealed connection of lines transporting liquid or gaseous media, comprising a first coupling half (2) and a second coupling half (3), which define a coupling axis (10) and are each equipped with a valve device forming a first, or respectively a second, valve device (4 or 5), which for the opening and closing thereof comprise a first, or respectively second, forced guidance device (6, 7) disposed in the associated coupling half (2, 3), comprising an actuating device (13) with an actuating element (130), that is disposed so as to rotate about the coupling axis (10) for actuating the two forced guidance devices (6, 7), wherein the first valve device (4) and the second valve device (5) comprise a first, or respectively second, flow-through element (41, 51) provided with a first, or respectively second, valve opening (43, 53) and a first shut-off element (42), or respectively a second shut-off element (52) which respectively close or open the first valve opening (43), or respectively the second valve opening (53), wherein the rotational movement of the actuating element (130) is converted into an axial movement which is aligned in one direction or the other of the coupling axis (10) depending on the direction of rotation of the actuating element (130) and causes the closing movement or opening movement of the shut-off element (42, 52), and comprising connector coupling parts (11, 12) connected detachably in a non-rotational and axially secured coupling connection (16), **characterized in that** the first shut-off element (42) and the second shut-off element (52) are coupled together directly and non-rotatably by means of a torque transferring coupling connection (17), produced by form-locking, and in this coupling interconnection (170) are disposed rotatable together about the coupling axis (10) and moveable in both directions of the coupling axis (10) for opening and closing the valve openings (43, 53), wherein the forced guidance devices (6, 7) comprise control means (61, 64, 71) which depending on the direction convert the rotational movement of the actuating element (130) into a screw-roll movement of the shut-off elements (42, 52) in the coupling interconnection (170), excluding opposing movements of the coupling elements (42, 52), and that the actuating element (130) is connected only to one of the two shut-off elements (42, 52) for converting the rotational movement of the actuating element (130) into the screw-roll movement of the shut-off elements (42, 52) being in the coupling interconnection (170), wherein starting from closed valve positions of the two shut-off elements (42, 52), the screw-roll movement leads in the one axial direction for opening, and in the other axial direction for closing the valve devices (4, 5).

2. Coupling device according to claim 1, **characterized in that** the actuating element (130) is a grip sleeve (131) rotatable about the coupling axis (10) that is disposed on one of the two coupling halves (2, 3).

3. Coupling device according to claim 1 or 2, **characterized in that** the two coupling halves (2, 3) are formed by a female part and a male part, wherein the female part has a first coupling housing (21), into which a component of the male part forming the second coupling housing (31) engages, and wherein the actuating mechanism (13) is disposed exclusively on the female part.

4. Coupling device according to any one of claims 1 to 3, **characterized in that** the control means of the first and the second forced guidance device (6, 7), disposed coaxially with the coupling axis (10), have a first control sleeve (61), or respectively a second control sleeve (71), which are each equipped on the periphery thereof with at least a first, or respectively a second control curve (62, 72) for causing the screw-rolling motion of the shut-off elements (42, 52), wherein the control curves (62, 72) are formed having the same guidance.

5. Coupling device according to claim 4, **characterized in that** the forced guidance devices (6, 7) comprise control studs (63, 73) engaging in the control curves (62, 72), that produce a control connection between the shut-off elements (42, 52) and the connector coupling parts (11, 12), wherein the connector coupling parts (11, 12) are securely connected to the associated flow-through elements (41, 51).

6. Coupling device according to claim 4 or 5, **characterized in that** the control sleeves (611, 711) are components of the connector coupling parts (11, 12), wherein the control sleeves (611, 711) encompass the shut-off elements (42, 52) (Fig 1A-2C).

7. Coupling device according to claim 6, **characterized in that** the control sleeves (611, 711) are disposed between housing sleeves (21, 31) of the coupling halves (2, 3) and the shut-off elements (42, 52).

8. Coupling device according to claim 4 or 5, **characterized in that** the control sleeves (612, 712) are components of the shut-off elements (42, 52) (Fig. 3A, B).

9. Coupling device according to claim 8, **characterized in that** the connector coupling parts (11, 12) are formed by a first housing sleeve (22) of the first coupling half (2), or respectively a second housing half (32) of the second coupling half (3).

10. Coupling device according to any one of claims 1 to 9, **characterized in that** the first, and respectively the second, valve device (4, 5) are formed by a first or respectively second shaft/sleeve valve that for the passage of media comprise a first, or respectively second, hollow valve shaft (411, 511), formed by the first, or respectively second, flow-through element (41, 51), and associated a first, or respectively second, valve sleeve (421, 521) formed by the first, or respectively second, shut-off element (42, 52), wherein each of the valve shafts (411, 511) can be connected at the line-side end thereof to the line to be connected, and on the other coupling-side end thereof is formed closed and on the periphery thereof is formed with valve openings (43, 53) that depending on the relative axial position of the valve shafts (411, 511) and the valve sleeve (421, 521) are closed in a sealed manner on the periphery or are in a sealed pass-through connection by means of at least one passage (49) formed in one of the valve sleeves (421).

11. Coupling device according to any one of claims 1 to 10, **characterized in that** the actuating element (130) is connected to a radial drive-control element (631) that engages in a drive guide track (64), which is formed only in the one coupling half (2) and produces a peripheral rotary drive only at one of the two shut-off elements (42, 52).

12. Coupling device according to claim 11, **characterized in that** the drive guide track (64) is a linear curve (640) that is parallel to the coupling axis (10).

13. Coupling device according to any one of claims 1 to 12, **characterized in that** the coupling connection (16) connecting the two connector coupling parts (11, 12) has a periphery locking edge (164) that is formed on the connector coupling part (11) of the coupling half (3) that is free of the actuating element (130), that the actuating element (130) is connected on the coupling-side to radial locking elements (161) that grasp in the axially secured connection of the two coupling halves (2, 3) behind the periphery locking edge (164) and are moveably guided thereupon in the peripheral direction, and that the connector coupling part (11) of the coupling half (2) equipped with the actuating element (130) has projections (163) on the coupling-side which engage into recesses (165) of the peripheral locking edge (164) for the non-rotatable connection, wherein the radial locking elements (161) correspond to the edge recesses (165) such that they can pass through the edge recesses (165) for producing and releasing the coupling connection (16).

## Revendications

1. Dispositif (1) d'accouplement formant un raccord sec pour la liaison étanche de conduites transportant des milieux liquides ou gazeux, comprenant une première moitié (2) de raccord et une deuxième moitié (3) de raccord, qui définissent un axe (10) d'accouplement et sont respectivement pourvues d'un mécanisme de soupape formant un premier voire deuxième mécanisme (4 voire 5) de soupape, lequel comprend un premier voire deuxième mécanisme (6, 7) de guidage forcé prévu dans la moitié (2, 3) de raccord correspondante pour son ouverture et sa fermeture, comprenant un mécanisme (13) d'actionnement avec un élément (130) d'actionnement tournant autour de l'axe (10) d'accouplement pour actionner les deux mécanismes (6, 7) de guidage forcé, le premier mécanisme (4) de soupape et le deuxième mécanisme (5) de soupape comprenant un premier voire deuxième élément (41, 51) d'admission pourvu d'une première voire deuxième ouverture (43, 53) de soupape et un premier élément (42) d'arrêt voire un deuxième élément (52) d'arrêt, qui ferme ou ouvre respectivement la première ouverture (43) de soupape voire la deuxième ouverture (53) de soupape, le mouvement rotatif de l'élément (130) d'actionnement étant changé en mouvement axial qui, en fonction du sens de rotation de l'élément (130) d'actionnement, va dans l'une ou l'autre direction de l'axe (10) d'accouplement et génère le mouvement de fermeture ou le mouvement d'ouverture des éléments d'arrêt (42, 52), et comprenant des attaches (11, 12) de raccord détachables en accouplement (16) résistant à la torsion et sécurisé au niveau axial, **caractérisé en ce que** le premier élément (42) d'arrêt et le deuxième élément (52) d'arrêt sont couplés directement de manière résistante à la torsion au moyen d'une liaison couplée (17) transmettant des couples générée par engagement positif et sont prévus pour tourner ensemble autour de l'axe (10) d'accouplement et être amovibles dans les deux directions de l'axe (10) d'accouplement pour ouvrir et fermer les ouvertures (43, 53) de soupape dans ce composé (170) d'accouplement, les mécanismes (6, 7) de guidage forcé comprenant des moyens (61, 64, 71) de commande qui - exception faite des mouvements opposés des éléments (42, 52) d'arrêt - transforment le mouvement rotatif de l'élément (130) d'actionnement en un mouvement de roulis hélicoïdal dépendant de la direction des éléments (42, 52) d'arrêt présents dans le composé (170) d'accouplement, et **en ce que** l'élément (130) d'actionnement est uniquement relié à l'un des deux éléments (42, 52) d'arrêt pour changer le mouvement de rotation de l'élément (130) d'actionnement en le mouvement de roulis hélicoïdal des éléments (42, 52) d'arrêt présents dans le composé (170) d'accouplement, le mouvement de roulis hélicoïdal dans l'une direction axiale provoquant - partant des positions de fermeture de soupape des éléments (42, 52) d'arrêt - l'ouverture et, dans le cas contraire, la fermeture des mécanismes (4, 5) de soupape.

2. Dispositif d'accouplement selon la revendication 1, **caractérisé en ce que** l'élément (130) d'actionnement est une douille (131) de préhension prévue pour tourner autour de l'axe (10) d'accouplement, et disposée sur une des deux moitiés (2, 3) de raccord.

3. Dispositif d'accouplement selon la revendication 1 ou 2, **caractérisé en ce que** les deux moitiés (2, 3) de raccord sont formées par une partie femelle voire une partie mâle, la partie femelle présentant une première coque (21) de raccord dans laquelle s'engage une deuxième coque (31) de raccord constitutive de la partie mâle, et le mécanisme (13) d'actionnement se trouvant exclusivement sur la partie femelle.

4. Dispositif d'accouplement selon l'une des revendications 1 à 3, **caractérisé en ce que** les moyens de commande des premier et deuxième mécanismes (6, 7) de guidage forcé présentent une première douille (61) de commande voire une deuxième douille (71) de commande disposée de manière coaxiale avec l'axe (10) d'accouplement, qui sont respectivement pourvues d'au moins une première voire deuxième came (62, 72) de commande à leur périphérie pour générer le mouvement de roulis hélicoïdal des éléments (42, 52) d'arrêt, les cames (62, 72) de commande étant à guidage similaire.

5. Dispositif d'accouplement selon la revendication 4, **caractérisé en ce que** les mécanismes (6, 7) de guidage forcé dans les cames (62, 72) de commande présentent des traverses (63, 73) de commande à engagement, qui assurent une liaison de commande entre éléments (42, 52) d'arrêt et attaches (11, 12) de raccord, les attaches (11, 12) de raccord étant fixées aux éléments (41, 51) d'admission correspondants.

6. Dispositif d'accouplement selon la revendication 4 ou 5, **caractérisé en ce que** les douilles (611, 711) de commande sont constitutives des attaches (11, 12) de raccord, les douilles (611, 711) de commande entourant les éléments (42, 52) d'arrêt (fig. 1A à 2C).

7. Dispositif d'accouplement selon la revendication 6, **caractérisé en ce que** les douilles (611, 711) de commande sont situées entre les douilles (21, 31) de coque des moitiés (2, 3) de raccord et les éléments (42, 52) d'arrêt.

8. Dispositif d'accouplement selon la revendication 4 ou 5, **caractérisé en ce que** les douilles (612, 712) de commande sont constitutives des éléments (42, 52) d'arrêt (fig. 3A, B).

9. Dispositif d'accouplement selon la revendication 8, **caractérisé en ce que** les attaches (11, 12) de raccord sont formées par une première douille (22) de coque de la première moitié (2) de raccord voire une deuxième douille (32) de coque de la deuxième moitié (3) de raccord.

10. Dispositif d'accouplement selon l'une des revendications 1 à 9, **caractérisé en ce que** le premier voire deuxième mécanisme (4, 5) de soupape est constitué par une première voire deuxième soupape à tige/douille qui, pour laisser passer le milieu, comprend une première voire deuxième tige (411, 511) de soupape creuse formée par le premier voire deuxième élément (41, 51) d'admission et une première voire deuxième douille (421, 521) de soupape correspondante formée par le premier voire deuxième élément (42, 52) d'arrêt, la tige (411, 511) de soupape étant respectivement raccordable à son extrémité côté conduite avec la conduite à relier, fermée au bout à son autre extrémité côté accouplement et formée avec les ouvertures (43, 53) de soupape à sa périphérie qui, en fonction de la position axiale relative de la tige (411, 511) de soupape et de la douille (421, 521) de soupape, sont fermées ou mises en liaison de transit étanche par au moins un passage (49) formé sur une des douilles (421) de soupape.

11. Dispositif d'accouplement selon l'une des revendications 1 à 10, **caractérisé en ce que** l'élément (130) d'actionnement est relié à un élément (631) de commande entraîneur radial qui s'engage dans une glissière (64) d'entraînement formée uniquement dans l'une moitié (2) de raccord et génère un entraînement périphérique rotatif uniquement sur l'un des deux éléments (42, 52) d'arrêt.

12. Dispositif d'accouplement selon la revendication 11, **caractérisé en ce que** la glissière (64) d'entraînement est une came linéaire (640) parallèle à l'axe (10) d'accouplement.

13. Dispositif d'accouplement selon l'une des revendications 1 à 12, **caractérisé en ce que** l'accouplement (16) des deux attaches (11, 12) de raccord présente un bord (164) de fermeture périphérique formé sur l'attache (11) de raccord de la première moitié (3) de raccord indépendante de l'élément (130) d'actionnement, **en ce que** l'élément (130) d'actionnement est relié côté accouplement à des éléments (161) de fermeture radiaux qui assurent la liaison axiale sécurisée des deux moitiés (2, 3) de raccord derrière le bord (164) de fermeture périphérique et sont prévus mobiles dans le sens de la circonférence, et **en ce que** l'attache (11) de raccord de la moitié (2) de raccord pourvue de l'élément (130) d'actionnement présente côté accouplement des parties saillantes (163) qui s'engagent dans des creux (165) du bord (164) de fermeture périphérique pour une liaison résistante à la torsion, les éléments (161) de fermeture radiale correspondant avec les creux (165) du bord de manière à pouvoir s'insérer dans les creux (165) du bord pour faire et défaire l'accouplement (16).
